# EUROPEAN PATENT SPECIFICATION

(11) **EP 1 578 004 B1**
(45) Date of publication and mention of the grant of the patent: **26.10.2011**
(21) Application number: 03768132.7
(22) Date of filing: 22.12.2003
(51) Int. Cl.: H02K 5/22

(54) **Portable electronic equipment**
Tragbares elektronisches Gerät
Appareil électronique portatif

(30) Priority: 27.12.2002 JP 2002381309
(43) Date of publication of application: 21.09.2005
(60) Divisional application: 10001912.4
(73) Proprietor: NAMIKI SEIMITSU HOUSEKI KABUSHIKI KAISHA, Tokyo 123-8511 (JP)
(72) Inventor: UCHIUMI, Hidehiro, NAMIKI SEIMITSU HOUSEKI K.K., Adachi-ku, Tokyo 123-8511 (JP); SUZUKI, Toshio, NAMIKI SEIMITSU HOUSEKI K.K., Adachi-ku, Tokyo 123-8511 (JP)
(74) Representative: Prinz & Partner
(86) International application number: PCT/JP2003/016415
(87) International publication number: WO 2004/062068

(56) References cited:
- JP-A- 4 162 385
- JP-A- 9 017 525
- JP-A- 11 086 962
- JP-A- 11 233 183
- JP-A- 2001 246 321
- JP-A- 2003 249 291
- JP-U- 2 024 466
- JP-U- 5 011 764
- JP-U- 61 074 250

## Description

### TECHNICAL FIELD

The present invention relates to a portable electronic equipment with a vibration-generating small-sized motor that operates with the capability of a silent vibration alarm (generally called the "manners mode"), mounted in the portable electronic equipment (including portable wireless telephones, PHS, small-sized wireless communications equipment, and also various types of portable information processing terminals). Specifically, it relates to a power feed mechanism connecting the motor to a power supply section of a circuit board within the electronic equipment.

### BACKGROUND ART

There are occasions, such as when people assemble in quiet public places like museums or concert halls, or when one is engaged in business talks or important conferences, in which people nearby would be greatly put out by the sudden ringing of portable electronic equipment (primarily portable telephones). For that reason, varieties of portable electronic equipment have come to be equipped with a silent alarm function, making use of vibration-generating small-sized motors such that one is notified of an incoming call by means of a bodily-sensible vibration.

These vibration-generating small-sized motors are equipped with eccentric weights on the motor's axis of rotation, and use the uneven centrifugal force when the center of gravity of the weight rotates when the motor is in operation to cause indirectly the vibration of the portable telephone or other electronic equipment. Therefore, with the spread of such varieties of portable electronic equipment, the proportion of equipment in which such motors are mounted and the frequency of their use are increasing daily. Particularly in the case of mobile communications equipment such as portable telephones and PHS, which are becoming markedly smaller and more popular, these vibration-generating small-sized motors are efficiently mounted in the limited physical space within the case.

Further, there are constant improvements in the method of supplying power from the power source (usually the circuit board) to the vibration-generating small-sized motor in this electronic equipment. One newly adopted mechanism is the use of terminals in place of soldered leads for attachment to the power supply or the equipment itself.

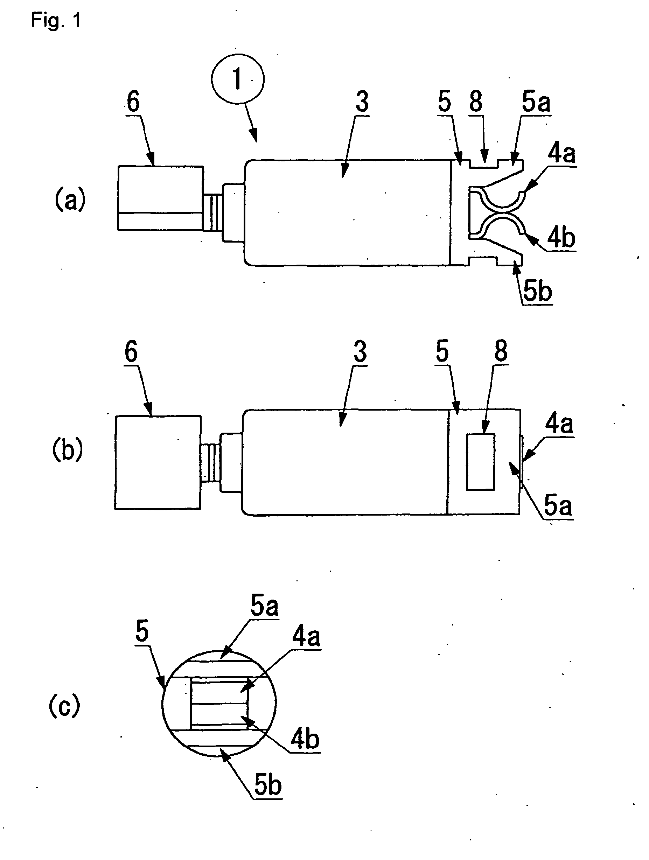

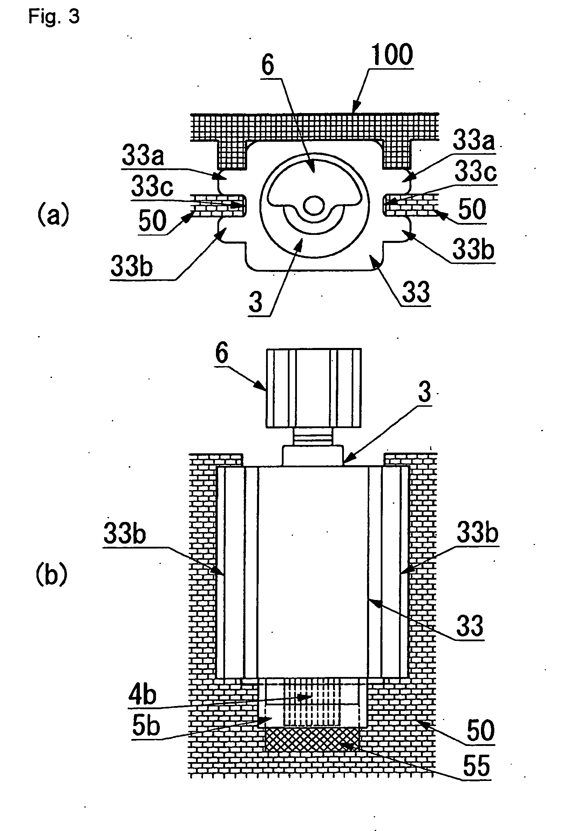

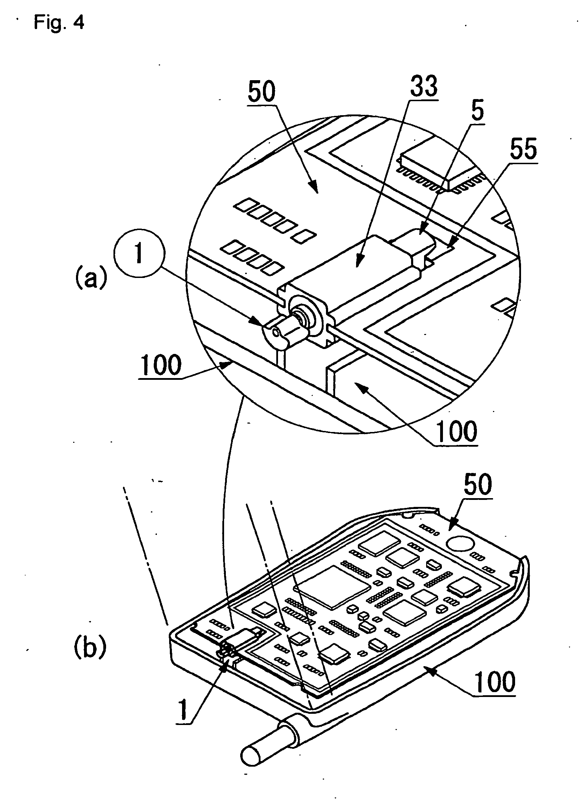

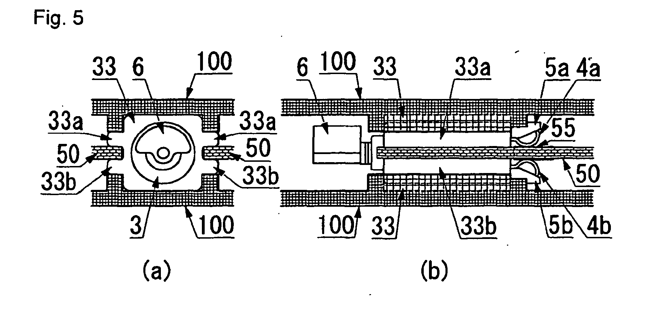

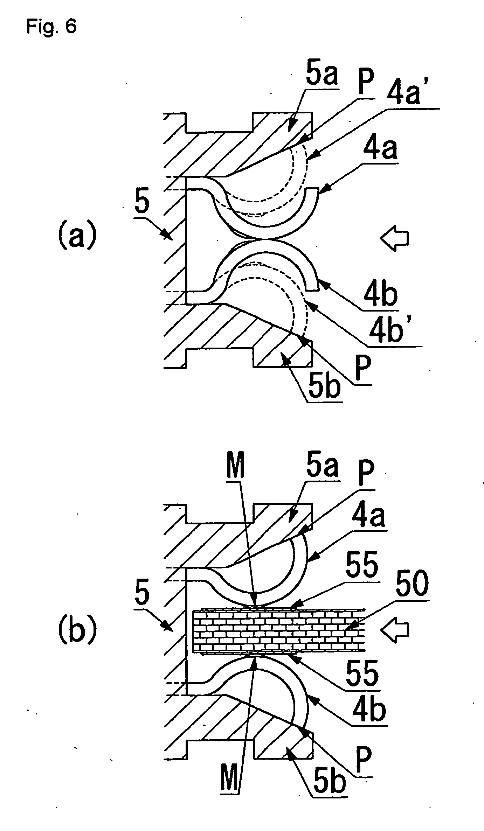

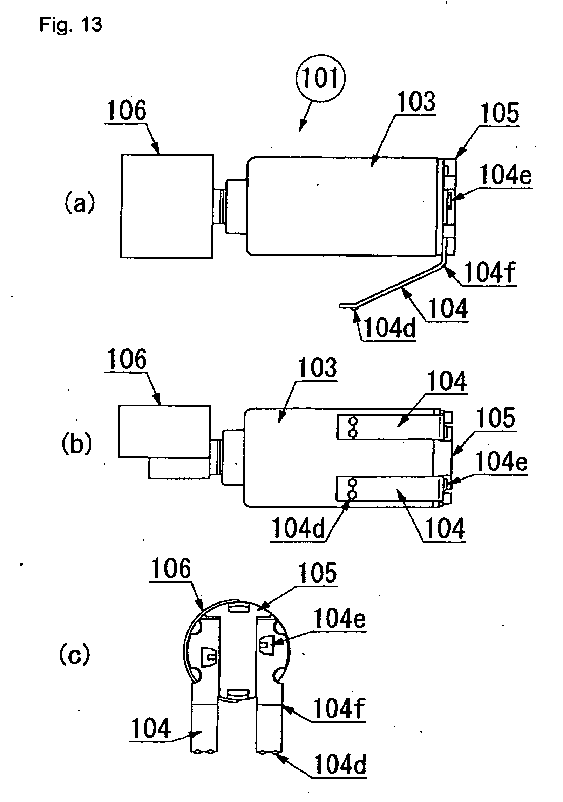

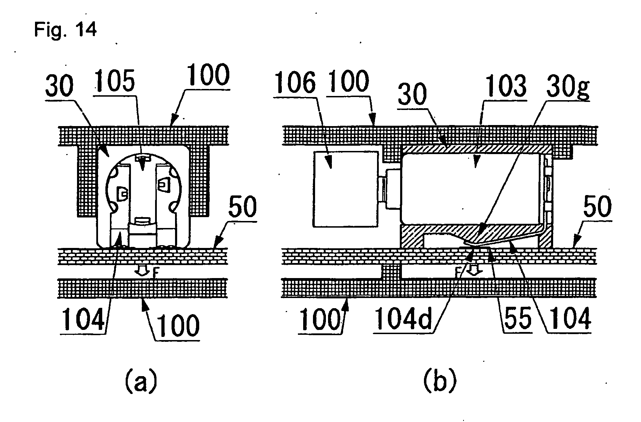

For example, in the portable electronic equipment in which these vibration-generating small-sized motors (hereafter called "vibrating motors" as necessary) are mounted, a power supply terminal mechanism like that shown in FIG **13** can be offered as a method that allows assembly with relatively few assembly processes and that enables direct power supply from the circuit board to the motor itself. The shape of the terminal shown in the figure is such that a portion of a power supply terminal **104** that is located in a terminal attachment **105** of a vibrating motor **101** is made of leaf spring that is bent at a bend **104f.** Because of the resiliency of the portion adjacent to the bend **104f,** contacts **104d** of the power supply terminal **104** are pressed into contact with electrodes or with power supply lands (not illustrated) of the circuit board (see, for example, pages **4** and **5** and figures **5** and **6** of Patent Reference **1:** Japanese Patent Laid-Open Publication No. H11-136901). Or as shown further in FIG. **14****,** by interposing an elastic pressure body **30** (primarily the **portion** designated **30g)** that covers a portion of the external housing case **103** between the power supply terminal **104** and the external housing case **103,** the elastic response of the leaf spring power supply terminal **104** and the elastic pressure body **30** (primarily the portion designated **30g**) are added together so that the contacts **104d** of the power supply terminal **104** are pressed into contact with the electrodes or with power supply lands **55** of a circuit board **50** (see, for example, pages **4** and **5** and figures **1** and **5** of Patent Reference 2: Japanese Patent Laid-Open Publication No. 2000-78790, and pages **13** to **16** and figures **3** and **4** of Patent Reference 3: Republished Patent No. WO 99/23801).

Similarly, there are a number of different parts and locations for attachment to motors with power supply terminals that have flexible parts that undergo elastic deformation under pressure (see, for example, pages **4** to **7** and figures **1** to **5** of Patent Reference 4: Japanese Patent Laid-Open Publication No. 2002-44907).

In the case of Patent Reference 1, however, as in the case of power supply terminal 104 shaped as in FIG. **13****,** the leaf spring undergoes elastic deformation primarily at the bend **104f,** and so when the vibrating motor is mounted in the electronic equipment, there is a separation between the bend **104f** and the contacts **104d;** this causes the drawback that use of the vibration function or impact from dropping the equipment can reduce the elasticity of the spring in a short period, which markedly reduces the reliability of connection with the power supply. Because vibration motors always operate under the adverse condition of vibration, such problems occur frequently.

In the cases of Patent References 2 and 3, on the other hand, the problem of reduced resiliency of the power supply terminals for the reasons stated can be dealt with by means of control through the elastic pressure body described in Patent Reference 2. However, that basically leaves unchanged the fact that the power supply terminal **104** is used in the form of a thin leaf spring with a length measurement that extends from the bend **104f,** where the spring is bent and easily loses elasticity, to the contacts **104d.** That does not represent a thorough resolution of the problem.

Similarly, in the case of Patent Reference 4, there are a number of different terminal configurations in which the flexible portion of the power supply terminal is set so that it is separated from and substantially perpendicular to the power supply lands, after which the terminal is put into contact with the inside of the case. The idea of the attachment mechanism that is common to these configurations is that the electrodes or power supply lands that constitute a standard contact area on the surface of the circuit board and the contact portion of the power supply electrodes that will contact the electrodes or power supply lands are pressed in the direction of the surface of the circuit board through the elastic pressure body; the force of pressure from the equipment case that sandwiches the external housing case of the motor compensates for the reduce elasticity of the leaf spring terminal by means of a rubber flexible body and at the same time applies pressure so that the pressure level of the electrical contacts of the terminal blade is reliably maintained. But while that problem is resolved, the method gives rise to several new problems.

In this structure, the leaf spring terminal and the motor are arranged so that they are stacked in the direction of thickness; this results in an increase of the overall thickness of the electronic equipment. Further, in a structure in which the contact points of the power supply terminal are subject to the stacking pressure, as shown in FIG. **14****,** the contact points **104d** of the power supply terminal **104** of the motor are held firm by being sandwiched between one side of the equipment case **100** and the circuit board **50.** Because of that, a force **F** is applied against the thin circuit board **50,** and there is concern that the stress may cause deformation or splitting of the circuit board **50.** Given the mode of use of portable electronic equipment, especially, there is constant demand to make the equipment thinner, but sometimes the equipment is dropped through a lack of attention, and strong impacts are often felt within the equipment case; there is apprehension that as the equipment grows thinner, malfunctions will result from poor connections caused by damage to the circuit board.

Accordingly, an object of the present invention is to enable a highly reliable connection between the power supply terminal of the motor and the electrode or the circuit board power supply land, and to enable a lengthy stable power supply (life-span). Thus the present invention has an object of providing a vibration-generating small-sized motor that operates with electrical stability. A further object of the present invention is to enable both a mounting structure for the motor that will not create an unnecessary stress load on the circuit board and a structure to hold the motor in place and reliably transmit vibrations to the case of the portable equipment.

### DISCLOSURE OF THE INVENTION

In order to resolve the above-described problem, the features of claim 1 are provided.

Accordingly, only the power supply terminal deforming flexibly is provided, and it is possible to shorten the length of substantial contact with the power supply land. Further, by having the power supply land of the circuit board of the electronic equipment clamped between the pair of terminal blades that face each other and press together, it is possible to connect the power supply terminal of the motor directly to the power supply of the electronic equipment. Therefore, there is no need to have indirect connection pieces in addition to the terminal blades and no need for space for such pieces; there are fewer parts, assembly is easier, and the connection is more reliable.

Also, according to one option, the power supply terminal is a pair of terminal blades of resilient, curved leaf spring material, located facing each other at one end of the external housing case and substantially parallel to an axis of rotation.

Accordingly, there are terminal blades facing each other at one end of the motor's external housing case and substantially parallel to the axis of rotation that make their connection parallel to the circuit board and within the outer dimensions of the terminal mount, so that the space occupied by the connection points of the power supply terminal does not substantially affect the thickness of the equipment in which the motor is mounted. Therefore, there is no need for extra space in the direction of the thickness of the equipment as in conventional contact and attachment structures using leaf spring terminals and elastic pressure bodies stacked with the body of the motor.

Also, according to another option the power supply terminal is a pair of terminal blades of resilient, curved leaf spring material, located facing each other at one side of the external housing case and substantially perpendicular to an axis of rotation.

Accordingly, there are terminal blades facing each other at one end of the motor's external housing case and substantially perpendicular to the axis of rotation that make their connection parallel to the circuit board and within the outer dimensions of the terminal mount, or within the radius of the external housing when it is substantially cylindrical, so that the space occupied by the connection points of the power supply terminal does not substantially affect the thickness of the equipment in which the motor is mounted. Therefore, there is no need for extra space in the direction of the thickness of the equipment as in conventional contact and attachment structures using leaf spring terminals and elastic pressure bodies stacked with the body of the motor.

Also, according to another option contact points of the terminal blades that face the electrode or the power supply land on the circuit board and vicinity thereof are exposed, and remaining outer peripheral portions of the terminal blades are covered with an insulating material.

Accordingly, the sides of the terminal blades of the power supply terminals that face the power supply land of the circuit board are exposed at and near the contact points and the remaining portions are covered and protected by an insulating material, so that portions of the terminal blades other than the contact points are prevented from contacting nearby electrical conductors, and so that it is possible to hold the terminal blades to the terminal mount and adjust the position of contact with the power supply lands in accordance with the desired shape of the terminal blades.

Also, according to another option each of the terminal blades of the pair of power supply terminals is independently positive or negative.

Accordingly, the individual terminal blades of the pair of power supply terminals have independent resiliency to press together against the separate positive and negative power supply lands on opposite sides of the circuit board on which the lands are located, and each terminal blade can connect directly with the power supply of the electronic equipment at a single touch. Therefore, there is no need to use indirect connection parts in addition to the terminal blades, assembly is easier, and the reliability of connection is improved. Further, because the positive and negative poles are separated on opposite sides of the circuit board, there is no danger of deforming the contact points of the terminal blades and accidentally causing a short circuit on the circuit board.

Also, according to another option both of the terminal blades of the pair of power supply terminals are either positive or negative, and two pairs are used together as positive and negative conductors.

Accordingly, the contact points of the individual terminal blades of the pair of power supply terminals have greater contact and a more sure connection with the positive or negative power supply lands located on opposite sides of the circuit board, and the reliability of connection at the contact points is further improved.

Also, according to another option the electrode or the power supply land on the circuit board of the electronic equipment are inserted in a direction substantially parallel to the pair of resilient terminal blades located facing each other, whereby the vibration-generating small-sized motor can be electrically connected to the power supply of the electronic equipment.

Accordingly, the terminal blades of the pair of facing power supply terminals are open so that the terminal blades are pushed apart in the direction of the thickness of the circuit board, and the contact points of the terminal blades contact the power supply lands located on opposite sides of the circuit board. At this time, the width of opening of the spring of resilient terminal blades is determined by the width between the power supply lands located on the two sides of the circuit board, namely essentially by the thickness of the circuit board, and the resiliency is essentially the same in both directions. Therefore, it is possible to make a firm connection with the power supply lands, and the reliability of the connection at the contact points of the terminal blades is improved.

Also, according to another option there are provided stoppers to limit the width of opening of the terminal blades in a direction that the terminal blades are pushed apart by the electrode or the power supply land on the circuit board.

Accordingly, when the terminal blades of the pair of power supply terminals that face each other are pushed apart in the direction of the thickness of the circuit board by the power supply lands located on opposite sides of the circuit board, the contact points of the terminal blades make contact with the power supply lands and part of each terminal blade contacts against the stopper. Thus, the resilient terminal blades gain new resiliency characteristics because of the two-point support add by the contact with the stoppers; this improves the resiliency of the terminal blades, enables more certain connections with the terminal blade contact points, and improves the reliability of the connection.

Also, according to another option the terminal-blade mount is made of an insulating material and located on one end or side of the external housing case and includes a substantially U-shaped groove cut therein, and the resilient terminal blades facing each other are located in a contact position corresponding to the electrode or the power supply land of the circuit board that are inserted into the groove, and the electrode or the power supply land are clamped between the resilient terminal blades when the electrode or the power supply land are inserted into the groove, whereby the vibration-generating small-sized motor can be electrically connected to the power supply of the electronic equipment.

Accordingly, as previously described, only the power supply terminal deforming flexibly is provided, and it is possible to shorten the length of substantial contact with the power supply lands. Further, by having the power supply lands of the circuit board of the electronic equipment clamped between the pair of terminal blades accommodated in a terminal-blade mount in which a substantially U-shaped groove has been cut, it is possible to connect the power supply terminal of the motor directly to the power supply of the electronic equipment. Further, because the mounting structure that accommodates the terminal blades is substantially within the form of the terminal-blade mount, the terminal blades do not project outward. Further, there is no need to have indirect connection pieces in addition to the terminal blades and no need for space for such pieces; there are fewer parts, assembly is easier, and the connection is more reliable.

Also, according to another option a position of connection of the electrode or the power supply land on the circuit board to the motor is in substantially the same plane as the central axis of rotation of the motor.

Accordingly, because the position of connection of the electrode or of the power supply land on the circuit board is in substantially the same plane as the central axis of the motor, the central axis of rotation of the motor is located at the center of the plane of the circuit board and the space occupied by the power supply terminal connections in the assembled state is within the space occupied by the connections on the circuit board, and there is no substantial effect on the thickness of the equipment in which the motor is mounted. Therefore, there is no need for extra space in the direction of the thickness of the equipment as in conventional contact and attachment structures using leaf spring terminals and elastic pressure bodies stacked with the body of the motor.

Also, according to another option a position of connection of the electrode or the power supply lands on the circuit board to the motor is located at any desired point from the central axis of rotation of the motor to an outer periphery of the terminal-blade mount at the external housing case.

Accordingly, because the position of connection of the electrode or of the power supply land on the circuit board to the motor is located at any desired point from the central axis of rotation of the motor to the outer periphery of the terminal mount at the end of the external housing case, assembly away from the center plane of the circuit board is possible, at a position offset from the central axis of rotation of the motor toward the outer periphery. Therefore, the space occupied by the power supply terminal connections with the motor and the circuit board in the assembled state is almost completely within the space occupied by the connections on the circuit board, and there is no substantial effect on the thickness of the equipment in which the motor is mounted. Therefore, there is no need for extra space in the direction of the thickness of the equipment as in conventional contact and attachment structures using leaf spring terminals and elastic pressure bodies stacked with the body of the motor.

Also, according to another option the motor includes a power supply mechanism in which each of the terminal blades of the pair of power supply terminals is independently positive or negative, and the circuit board within the electronic equipment includes wiring on both surfaces corresponding to the power supply mechanism.

Accordingly, the present invention enables high connection reliability between the power supply terminal and the electrodes or the power supply lands of the circuit board, which is its object, as well as long-term, and enables stable supply of power (long service life), so that it provides the vibration-generating small-sized motor that has electrically stable operation. Moreover, it enables the dual capabilities of a mounting structure that does not impose an unnecessary stress load on the circuit board and a motor support structure that reliably conveys vibrations to the equipment case of the portable equipment.

Accordingly, as stated above, the present invention enables high connection reliability between the power supply terminal and the electrodes or the power supply lands of the circuit board, which is its object, as well as long-term, stable supply of power (long service life), and it provides the vibration-generating small-sized motor that has electrically stable operation. Moreover, it enables the dual capabilities of a mounting structure that does not impose an unnecessary stress load on the circuit board and a motor support structure that reliably conveys vibrations to the equipment case of the portable equipment.

### BRIEF DESCRIPTION OF DRAWINGS

FIG.**1** is a front (**a**), top (**b**), and right side (**c**) view of a vibrating motor of the first embodiment.

FIG. **2** is a left side (**a**) and front (**b**) view of the vibrating motor of the first embodiment when mounted in an electronic equipment case.

FIG. **3** is a top (**a**) and front (**b**) view of a vibrating motor of the fourth embodiment when mounted in the electronic equipment case.

FIG. **4** is a partially enlarged (**a**) and overall perspective (**b**) view of the vibrating motor of the fourth embodiment when mounted in the electronic equipment case.

FIG. **5** is a left side (**a**) and front (**b**) view of the vibrating motor of the fourth embodiment when mounted in the electronic equipment case.

FIG. **6** is a schematic view to explain a structure of a power supply terminal of the vibrating motor of the first embodiment before insertion of a circuit board (**a**) and when connected after insertion of the circuit board (**b**).

FIG. **7** is a schematic view to explain the structure of the power supply terminal of another vibrating motor of the first embodiment before insertion of the circuit board (**a**) and when connected after insertion of the circuit board (**b**).

FIG. **8** is a schematic view to explain the structure of the power supply terminal of another vibrating motor of the first embodiment before insertion of the circuit board (**a**) and when connected after insertion of the circuit board (**b**).

FIG. **9** is a schematic view to explain the structure of the power supply terminal of another vibrating motor of the first embodiment before insertion of the circuit board (**a**) and when connected after insertion of the circuit board (**b**).

FIG. **10** is a front (**a**), bottom (**b**), and left side (**c**) view of a vibrating motor of the second embodiment.

FIG. **11** is a front (**a**), bottom (**b**), and left side (**c**) view of another vibrating motor of the second embodiment.

FIG. **12** shows a vibrating motor of the third embodiment in a cross section of the internal structure (**a**), a schematic view of the power supply terminal portion (**b**), and a schematic view of attachment to the circuit board of the electronic equipment.

FIG. **13** is a front (**a**), bottom (**b**), and right side (**c**) view of an examplified conventinal vibrating motors.

FIG. **14** is a right side (**a**) and front (**b**) view of the conventional vibrating motor mounted within the electronic equipment case.

### BEST MODE FOR CARRYING OUT THE INVENTION

[First Embodiment]

The constitution of the first embodiment of the present invention is explained in detail below, with reference to FIGS. **1****,** **2****,** and 6 through **9.**

A vibrating motor **1** in FIG **1** comprises a motor made up of a substantially cylindrical external housing case **3,** a terminal-blade mount **5** located at one end of an external housing case **3** and a power supply terminal **4** comprising terminal blades **4a, 4b** mounted thereon, and a mechanism to generate vibrations which comprises an eccentric weight **6** that is fixed to a spindle of the motor. The terminal-blade mount **5** of the motor **1** is substantially cylindrical to match the end of the external housing case **3,** and a portion such as stoppers **5a, 5b** shown in FIG. **1**(**a**) projects in a direction of the spindle extended to encompass the power supply terminal **4** on both sides.

Meanwhile, the power supply terminal **4** is assembled as shown in the figure, with a pair of resilient terminal blades **4a, 4b,** which face and approach each other, being attached to the end of the terminal-blade mount **5** parallel to the direction of the axis of the motor, like the stoppers **5a, 5b** of the terminal-blade mount **5.** This mounting position is in substantially the same plane as the central axis of rotation of the motor which has the cylindrical external housing case **3,** making a positionally symmetrical power supply terminal structure. The terminal blades **4a, 4b** are a pair of substantially semicircular-curved leaf spring as shown in FIG **1**(**a**), and they face and approach each other.

The function and operation of the terminal blades **4a, 4b** in the terminal-blade mount **5** is explained in FIG **6**.

In FIG. **6****,** (**a**) represents the state prior to insertion of the electrodes or the power supply lands on the circuit board; the terminal blades **4a, 4b** are in a no-load condition, facing and touching each other. When the circuit board is inserted in a direction shown by a arrow, the terminal blades **4a, 4b** are separated and open to the position shown by the broken-line terminal blades **4a', 4b'.** There are stoppers **5a, 5b** located on the end of the terminal-blade mount **5,** and at this time the tips of the terminal blades **4a,** 4b are limited in their spread in the direction of opening by the support points **P** of the inner, backing faces of the stoppers **5a, 5b.**

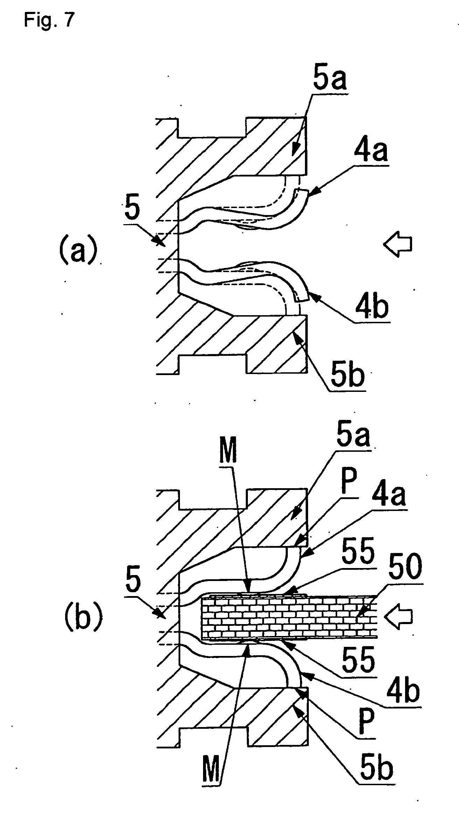

FIG. **6**(**b**) indicates a clamped state at that time: a circuit board **50** is inserted to push the terminal blades **4a, 4b** apart, and the contact points **M** of the terminal blades **4a, 4b** are connected to power supply lands **55** of the circuit board **50.** The width of the opening is controlled as a design measurement in conjunction with the thickness of the circuit board, and should always be such that the tips of the terminal blades **4a, 4b** will touch the stoppers **5a, 5b.** By this means, the terminal blades **4a, 4b** have the resiliency of a dual support structure, having in addition to the blade supports the further support of the stoppers **5a, 5b** located on the terminal-blade mount; this yields sustained spring characteristics including greater strength and less fatigue settling. The action and effect of the terminal blades **4a**, **4b** shown in FIG. **7** is the same as those shown in FIG **6**.

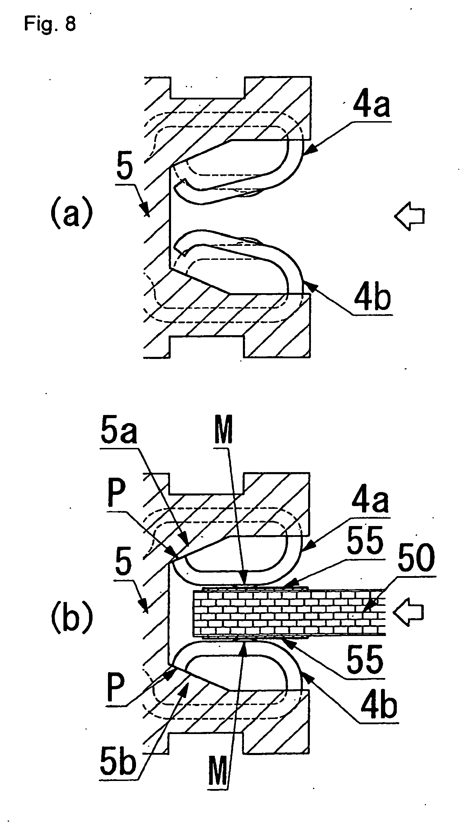

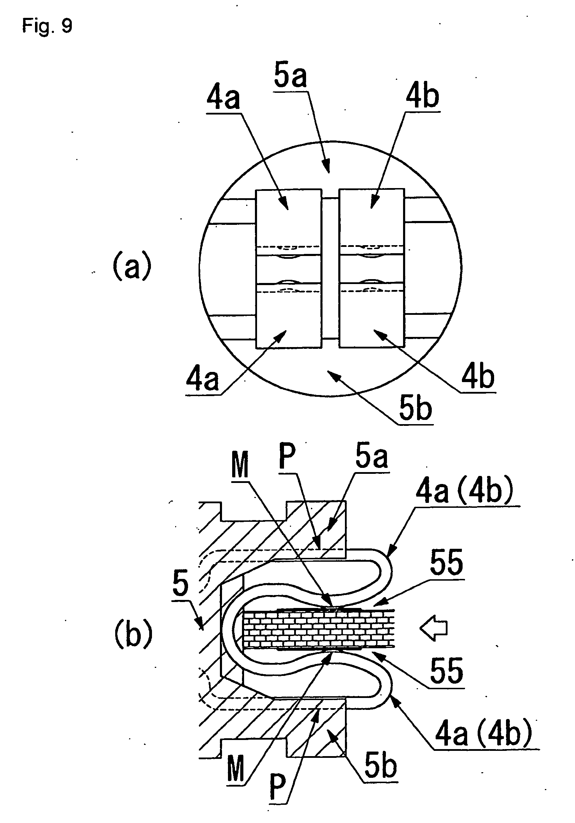

FIGS. **8** and **9** show different shapes of the terminal blades **4a,** 4b. The power supply terminal **4** in FIG. **8** has the terminal blades **4a, 4b** that face the power supply lands **55** attached within substantially U-shaped grooves cut into the terminal-blade mount **5,** with the contact points and nearby portions of the terminal blades **4a, 4b** exposed and the rest of the outer surface of the terminal blades **4a, 4b** covered by insulating material. The direction of bending of the terminal blades is different from that described above, of course, and so the locations of the stoppers **5a, 5b** and the support points **P** on their backing faces is changed as shown in the figure.

The power supply terminals shown in FIGS. **6** through **8** all have facing pairs of resilient curved leaf spring material, and the individual terminal blades **4a, 4b** of each power supply terminal **4** are individual conductors of positive or negative polarity. Because the circuit board **50** of the portable electronic equipment, with which the power supply terminal **4** connects, is a circuit board with wiring on both surfaces corresponding to the power supply terminal **4,** the motor can easily be electrically connected to the circuit board **50** by just clamping to both sides of a portion of it.

That is, the power supply terminal **4** is at a face of the external housing case **3**, and is electrically connected to the power supply of the electronic equipment when the electrodes or the power supply lands **55** on the circuit board are inserted in a direction substantially parallel to the terminal blades **4a, 4b** and held in place between the resilient terminal blades **4a, 4b** that face and approach each other on the terminal-blade mount **5.**

As an exception, such as the power supply terminal structure shown in FIG **9****,** it is possible to have a power supply terminal with two pair of terminal blades **4a, 4a** (**4b, 4b**) with the conductor of each pair having a positive or negative polarity, and the two pairs together having independent positive polarity on one conductor and negative polarity on the other.

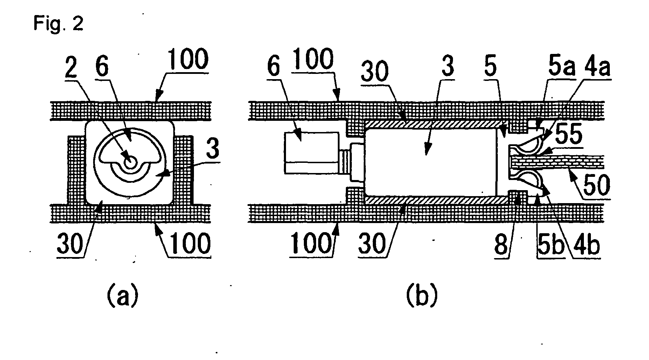

Next, a representative illustration of an example of the vibrating motor **1** mounted within the portable electronic equipment is shown in FIG. **2****.** In FIG **2****,** both (**a**) and (**b**) are diagrams of the mounting structure when the vibrating motor 1 is set within the equipment case of the portable electronic equipment. In the space fitted to the motor set off by partition walls in an equipment case **100** of the portable electronic equipment, and with the intervention of mounting material in the form of a holder **30** which covers the outside of the external housing case **3,** the motor is sandwiched and held between the upper and lower parts of the equipment case **100** of the portable electronic equipment, the case being divided into two parts as shown in the figure. Now, in the figure, a part denoted by a reference numeral **8** on the outer surface of the terminal-blade mount **5,** where a part of the partition wall is in contact with the motor, is a whirl-stop to hold the motor in place, but it is not really necessary during mounting in the present invention.

Further, the circuit board **50** within the equipment case of the portable electronic equipment is sandwiched, as shown in the figure, between the terminal blades **4a,** 4b on the terminal-blade mount **5** of the power supply terminal **4** located at one end of the motor, and it is held in place in a central position within the thickness measurement of the diameter of the motor. Because of this, there is no need for space for the excess height of the conventional structure, shown in FIG **14****,** in which contact points **104** are stacked upwards with an elastic pressure body in between. The portable electronic equipment is thinner, and there is greater freedom, in regard to space, in the basic design and physical layout.

In particular, as apparent from a comparison of FIG. **2** and FIG **14****,** mounting space can be assured within the range of the outside diameter of the terminal-blade mount **5** at the end of the external housing case when the position of the connection between the motor and the electrodes or the power supply lands **55** of the circuit board **50** is at the position of the central axis of rotation of the motor. In other words, by assembling the circuit board in a substantially parallel direction at any desired point within the range of the thickness of the motor, adopting the power supply terminal structure described above, space problems that accompany reduction of the thickness of the portable electronic equipment disappear, and the degree of freedom in the basic design of the actual layout of the equipment is increased.

[Second Embodiment]

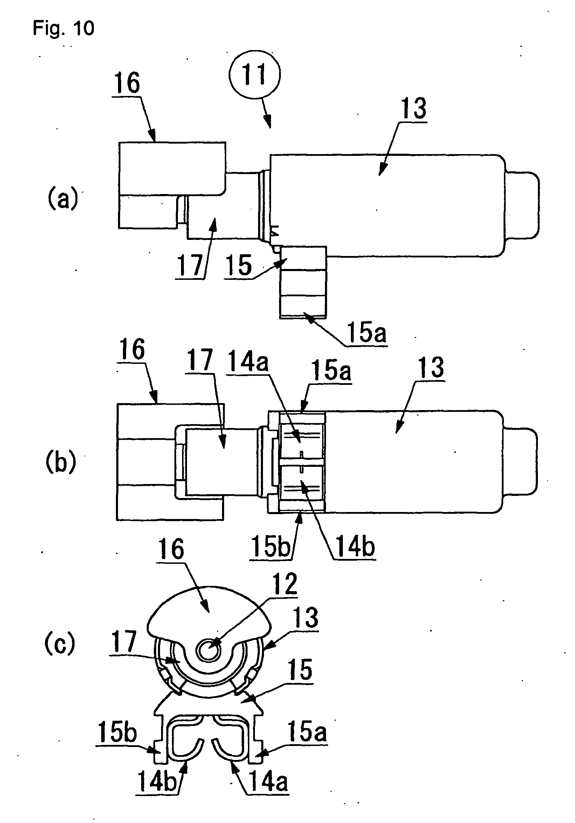

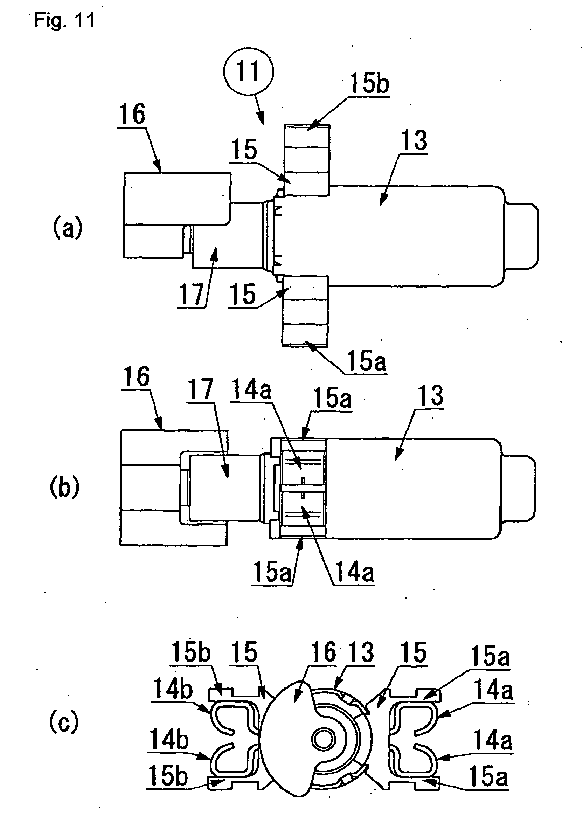

The constitution of the second embodiment of the present invention is explained in detail below, with reference to FIGS. **10** and **11**.

A vibrating motor **11** in FIG **10** comprises a motor made up of a substantially cylindrical external housing case **13**, a terminal-blade mount **15** located at one end of the external housing case **13** and a power supply terminal **14** comprising terminal blades **14a, 14b** mounted thereon, and a mechanism to generate vibrations which comprises an eccentric weight **16** that is fixed to a spindle **12,** which is supported by a bearing **17** that is molded as a unit with the terminal-blade mount **15.** The terminal-blade mount **15** of the motor **11** is positioned on the side and at one end of the external housing case **13,** and is substantially perpendicular to the axis of rotation. The pair of facing, resilient, curved leaf spring terminal blades **14a, 14b** is similarly positioned to project in a position substantially perpendicular to the axis of rotation. Further, as described previously, a portion of the terminal-blade mount **15** extends in the same direction as stoppers **15a**, **15b,** as shown in FIG. **10**(**c**), so as to enclose the power supply terminal **14** which comprises terminal blades **14a, 14b** from both sides.

The power supply terminal **14** shown in FIG. **11** comprises a pair of facing, resilient, curved leaf springs; each terminal blade **14a, 14b** of the power supply terminal **14** is an independent conductor of positive or negative polarity, and the circuit board of the portable electronic equipment to which it is connected is a circuit board with wiring on both sides corresponding to the power supply terminal **14.** By this means, the electrical connection to the motor can be made easily by simply clamping both sides of a portion of the circuit board.

Meanwhile, the power supply terminal **14,** as shown in FIG. **11****,** can be a pair of power supply terminals having terminal blades **14a, 14a** and **14b, 14b** respectively, each terminal being a conductor with either positive or negative polarity. By means of assembly with two pairs, as shown in the figure, it is possible to have independent conductors on the left and the right sides, with the positive pole on one side and the negative pole on the other. This enables a multi-point connection with the power supply lands on the circuit board, and a more certain, reliable connection can be obtained. The power supply lands on the circuit board are located in positions corresponding to the two pairs of terminal blades.

Further, the mounting position is in substantially the same plane as the axis of rotation of the motor having a cylindrical outer housing case **13**; this is a symmetrical power supply terminal structure centered on the spindle of the motor, such that a portion of the flat circuit board can be inserted. Further, the shape of the terminal blades **14a, 14b** has contact points on the terminal blades, made of curved leaf spring material as shown in the figure, that are lined up facing each other. Now, the function and operation of the terminal blades **14a, 14a** or **14b, 14b** in terminal mounts **15, 15** are almost the same as described previously, and so explanation of them has been omitted.

[Third Embodiment]

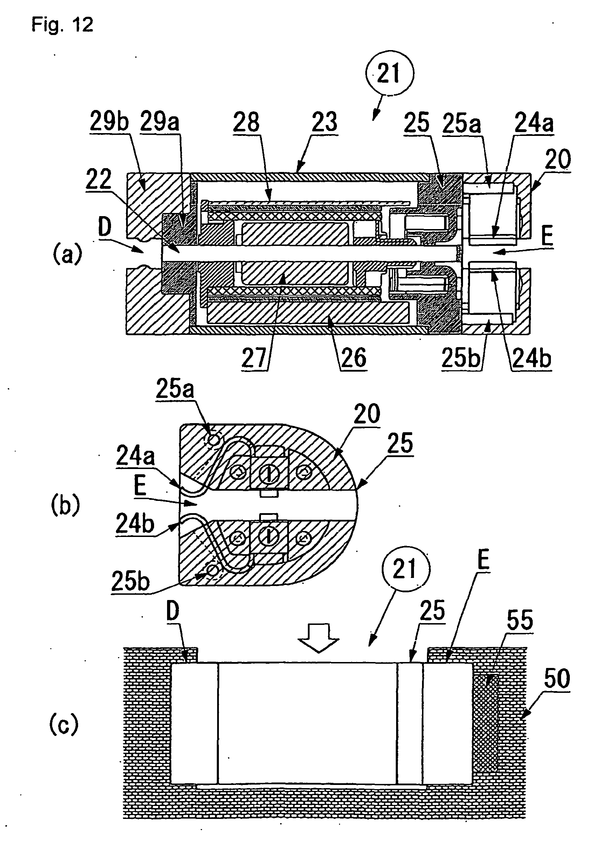

The constitution of the third embodiment of the present invention is explained in detail below, with reference to FIG **12****.**

A vibrating motor **21** in FIG. **12** comprises a mechanism to generate vibrations of the fixed spindle outer rotor type in which the eccentric-weight mechanism to generate vibrations and the stator and rotor drive mechanism are all incorporated within a substantially cylindrical external housing case **23.** In (a) of the figure, a reference numeral **27** denotes a cylindrical magnet, and is fixed between flanges **29a, 29b** that surround a terminal-blade mount **25** and a spindle **22.** That constitutes the stator, along with an external housing case **23,** whereas a rotor **28** comprises a wound coil located facing the outer periphery of a magnet **27,** along with a yoke and a commutator. An eccentric weight **26** mounted outside the rotor **28** is driven within the external housing case **23.**

With regard to a power supply terminal **24,** meanwhile, as shown in FIG. **12(b)****,** a pair of terminal blades **24a, 24b** of the power supply terminal **24** are mounted substantially perpendicular to a central spindle **22,** at the end of a terminal-blade mount **25** on one side of the external housing case **23.** The position for insertion of the circuit board is cut into a cover **20** that protects the power supply terminal, and only the contact point portions of the pair of facing, resilient curved leaf spring terminal blades **24a, 24b** are exposed. The power supply lands **55** of the circuit board **50** are inserted into the gap designated **E** in the figure and a portion of the circuit board **50** or the equipment case **100** (not illustrated) is inserted into that designated **D** at the other end in order to give dual support to the motor. As shown in FIG **12(c)****,** for example, it is possible to insert and fix the motor to the circuit board by sliding the portions designated **D** and **E** in the direction shown by the arrow so the motor fits into a rectangle cut into the circuit board **50.**

Further, the mounting position of the circuit board **50** in this case is in substantially the same plane as the central axis of the motor which has a substantially cylindrical external housing case **23.** In this way, the degree of freedom in the basic design of the actual layout, in connection with space problems that accompany reduction of the thickness of portable electronic equipment, is increased.

Further, regarding the shape of the terminal blades **24a, 24b,** the terminal blades are curved leaf spring material with a three-dimensional fitting portion as shown in the figure. They face each other so that the contact points are lined up. Now, the function and operation of the terminal blades **24a, 24b** in terminal mount **25** are almost the same as described previously, and so explanation of them has been omitted. The stoppers **25a**, **25b,** however, have somewhat different support locations; the support is not at the tips of the terminal blades **24a, 24b;** rather, the support is at the bends along the substantially S-shaped terminal blades, as shown in the figure.

The constitution of a holder is explained in detail below, with reference to FIGS. **3** through **5**. The mounting structures in each figure explain in detail the holder that covers the outside of the external housing case of the motor, as well as the circuit board and the constitution of the inside of the equipment case of the portable electronic equipment, which support the holder within the portable electronic equipment.

In FIG **3****,** a reference **numeral 33** denotes a holder that covers the outside of the external housing case of the motor; the inside of the holder is formed in essentially the same shape as the outside of the external housing case **3,** and there are provided rails **33c** in the form of U-shaped grooves running along the outside. There are provided extensions **33a, 33b** of the holder **33** that project on both sides of the U-shaped rail **33c.** A cut-out from the circuit board **50,** as shown in (**b**) of the figure, is inserted into the groove-shaped rails **33c, 33c**; this suspends the holder **33** and at the same time connects the terminal blades **4a, 4b** of the power supply terminal **4** to the power supply lands **55.** Then the circuit board and all are accommodated in the mounting position by the partition walls within the equipment case of the portable electronic equipment, as shown in FIG. **4** and, finally, the extensions **33a, 33a** and **33b, 33b** of the holder **33,** together with the circuit board **50,** are clamped in place by the partition walls of the other side of the equipment case **100** of the electronic equipment. By this means, the vibrating motor 1 is fixed in place within the portable electronic equipment.

FIG **5** (**a**) and (**b**) show, from two directions, an example of assembly by mounting the holder **33** in the circuit board **55** within the portable electronic equipment. The material used for the holder **33** that covers the outside of the external housing case **3** of the motor can be selected as desired from among rubber-based elastic materials or resin-based insulating materials. In terms of material properties, it should accurately convey the notification vibration of the vibrating motor to the portable electronic equipment case; there are many candidates, including rubber-based elastic materials such as silicone rubber and other synthetic rubbers used in electronic equipment, and relatively elastic polymer insulating materials such as PBT.

FIG. **5 (a)** and **(b)** are explained in further detail by comparing the assembly of the portable electronic equipment with FIG. **14****,** an example of an conventional mounting method, and explaining the differences.

The first big difference is the clearly different location of the connection between the power supply terminal and the electrodes or the power supply lands of the circuit board. The location of the connection in the present invention, shown in FIG **5**, is a central position substantially along the axis of rotation of the motor. Therefore the circuit board **50** is sandwiched, and the height measurement including the holder **33** is small, not exceeding the measurement of the holder **33.** In contrast to the older stacked structure in which the motor, holder and terminal blades are atop the surface of the circuit board, the equipment case as a whole can be made thinner, and there is a higher degree of spatial freedom in the basic design in regard to the actual layout of the portable electronic equipment.

Moreover, considering the pressure on the circuit board **50** that is a problem in the conventional technology, with the structure of the present invention the circuit board **50** is in a central position, and is sandwiched by the two halves of the divided equipment case **100** of the portable electronic equipment; there is elastic support from the extensions **33a, 33b** of the holder **33** and a portion of the circuit board **50** is held in the designated position at the center. With this mounting structure, there is no deformation from bending stress on the circuit board **50** itself. For that reason, the rigidity of the portion of the equipment case where the motor is mounted is improved, as is the support strength of the circuit board **50;** the mounting is secure.

As shown in FIG **5****,** in other words, an edge of the circuit board **50** is inserted in the U-shaped groove rail **33c** of the holder **33** that covers the outside of the motor's external housing case **3,** the extensions **33a, 33a** and **33b, 33b** of the holder **33** that project on both sides of the U-shaped groove rail **33c** are held under pressure by assembly fittings on the divided equipment case **100** of the portable electronic equipment, and at the same time the inserted circuit board **50** is sandwiched by the divided case. By this means, the vibrating motor **1** is fixed securely in place within the portable electronic equipment.

In this way, not only the vibrating motor **1,** but also a portion of the circuit board **50** is supported by the extensions **33a, 33a,** and **33b, 33b** of the holder **33,** and when the motor **1** and the circuit board are assembled, the motor 1 is easily mounted by just sliding the edge of the circuit board **50** into the rail **33c.** Further, either of the extensions **33a, 33a** or **33b, 33b** of the holder **33** can be molded of a polymer with the other being molded as a unit with the rubber elastic body so that the holder can be assembled by pushing the rubber elastic body into the opening cut into the circuit board **50** and suspending it there.

Now, the material and shape of the holder are design considerations, and as long as it does not depart from the purport of the invention, the shape of the holder can be square pillar, cylindrical, or some other desired shape. The material of the elastic body can be selected from among any appropriate materials, with the condition that it be able to maintain elasticity over a long period while distorted by compression or tension.

### INDUSTRIAL APPLICABILITY

As explained above, the present invention relates to the vibration-generating small-sized motor that operates with the capability of the silent vibration alarm (generally called the "manners mode"), to be mounted primarily in the portable electronic equipment (including portable wireless telephones, PHS, small-sized wireless communications equipment, and also various types of portable information processing terminals). Specifically, it relates to the power feed mechanism connecting the motor to the power supply section of the circuit board within electronic equipment.

According to the present invention, the power supply terminal of the vibrating motor mounted in the portable electronic equipment can be reliably connected electrically to the electrodes or to the power supply lands on the circuit board of the electronic equipment, and can be maintained in the connected state continuously over the long period.

That is, in the present invention, the power supply terminal comprises just the terminal blades which are small pieces that deform flexibly, and it is possible to make the essential length of their contact with the power supply land much shorter than in the conventional technology. Because of this size advantage, it is possible to reduce the material cost of the terminal blades. Moreover, by just sandwiching the power supply land on the circuit board of the electronic equipment between a pair of terminal blades that face and approach each other, it is possible to easily connect the power supply terminal of the motor directly to the power supply of the electronic equipment. Therefore, the connection route of the power supply is shorter, the structure is simpler, and there is no need to provide indirect connection parts in addition to the terminal blades. And so, there is that much less space required, the number of parts is reduced, assembly is easier, and the reliability of connection is improved.

Further, in the present invention, each of the pair of facing terminal blades of the power supply terminal spreads apart in the direction of the thickness of the circuit board and the contact points of the terminal blade contacts the power supply land located on the circuit board that is sandwiched, so that the width of opening of the spring of the resilient terminal blades is determined by the width between the power supply lands located on the two sides of the circuit board, namely essentially by the thickness of the circuit board, and the resiliency is essentially the same in both directions. Moreover, when a portion of the terminal blade comes in contact with the stopper, the resilient terminal blades gain new resiliency characteristics because of the two-point support added by the contact with the stoppers, which improves the resiliency of the terminal blade. Therefore, it is possible to make the firm connection with the power supply lands, and the reliability of the connection at the contact points of the terminal blades is improved.

Furthermore, the extensions of the holder that project on both sides of the groove-shaped rails are held under pressure from the assembly fittings of the divided equipment case of the portable electronic equipment, and so the mounting position of the inserted circuit board is in the center; when the holder extensions on both sides of the rails are assembled with the equipment case on both sides, the extensions are held in place under equal pressure from the equipment case. Accordingly, there is no worry about the effect of stress distortion on the circuit board in the middle; the holder that holds the motor, with the circuit board in a central position, can be fixed in place between the halves of the divided equipment case. Therefore, in the assembled state it is possible to convey the vibrations of the vibrating motor to the equipment case of the portable electronic equipment without fail.

Additionally, it is possible to hold the motor indirectly, through the holder, in the circuit board within the portable electronic equipment. In connection with the position of the holder which is sandwiched on the plane of the circuit board, or more specifically, because the circuit board is located in the same plane as the central axis of the motor, the central axis of the motor matches the plane of the circuit board, and the space occupied by the power supply terminal connections in the assembled state is within the range of the space occupied by the connections on the circuit board, so that the connections have no substantial effect on the thickness of the equipment in which the motor is mounted. Therefore, compared with the conventional connection and holding structure, in which the resilient terminal, the elastic pressure body, and the motor are stacked up, with this invention there is no need for excess space in the direction of the thickness of the equipment, and smaller, lighter, and thinner portable electronic equipment can be realized.

### DESCRIPTION OF REFERENCE NUMERALS

- 1, 11, 21, 101: Vibrating motor
- 2,12: Spindle
- 3, 13,23, 103: External housing case
- 4, 14, 24, 104: Power supply terminal
- 4a,4b, 14a, 14b,24a,24b: Terminal blade
- 5,15,25, 105: Terminal blade mount
- 5a,5b, 15a, 15b, 25a, 25b: Stopper
- 6,16,26, 106: Eccentric weight
- 8: Whirl-stop
- 17: Bearing
- 20: Cover
- 22: Central axis
- 27: Magnet
- 28: Rotor
- 29a,29b: Flange
- 30,33: Holder
- 33a,33b: Extension
- 33c: Rail
- 50: Circuit board
- 55: Power supply land
- 100: Equipment case
- 104d: Contact point
- 104e: Terminal
- 104f: Bend

## Claims

1. A portable electronic equipment comprising a vibration-generating small-sized motor (1) that includes a mechanism to generate a vibration using an eccentric weight (6), the motor (1) being mounted inside the portable electronic equipment equipped with an electrode or a power supply land (55) on a circuit board (50), the motor (1) comprising within an external housing case (3; 13) thereof:
a stator and a rotor;
a commutation mechanism;
a power supply terminal (4; 24) that connects electrically with the electrode or power supply land (55) of the electronic equipment; and
a terminal-blade mount (5; 15; 25) on which the power supply terminal (4) is mounted,
wherein said power supply terminal (4) includes a pair of resilient terminal blades (4a, 4b; 14a, 14b; 24a, 24b) that are located on said terminal-blade mount (5) provided at a face of the external housing case (3; 13) of the motor (1), facing each other and pressing together, and the electrode or the power supply land (55) on the circuit board (50) are clamped between said resilient terminal blades (4a, 4b; 14a, 14b), whereby the vibration generating small-sized motor (1) can be electrically connected to the power supply of the electronic equipment.

2. The portable electronic equipment according to claim 1, wherein said power supply terminal (4) is a pair of terminal blades (4a, 4b) of resilient, curved leaf spring material, located facing each other at one end of the external housing case (3) and substantially parallel to an axis of rotation.

3. The portable electronic equipment according to claim 1, wherein said power supply terminal (4) is a pair of terminal blades (14a, 14b) of resilient, curved leaf spring material, located facing each other at one side of the external housing case (13) and substantially perpendicular to an axis of rotation.

4. The portable electronic equipment according to any one of claims 1 through 3, wherein contact points of said terminal blades (4a, 4b) that face the electrode or the power supply land (55) on the circuit board (50) and vicinity thereof are exposed, and remaining outer peripheral portions of said terminal blades (4a, 4b) are covered with an insulating material.

5. The portable electronic equipment according to any one of claims 1 through 4, wherein each of the terminal blades (4a, 4b) of said pair of power supply terminals (4) is independently positive or negative.

6. The portable electronic equipment according to any one of claims 1 through 4, wherein both of the terminal blades (14a, 14b) of said pair of power supply terminals (4) are either positive or negative, and two pairs are used together as positive and negative conductors.

7. The portable electronic equipment according to any one of claims 1 through 6, wherein the electrode or the power supply land (55) on the circuit board (50) of the electronic equipment are inserted in a direction substantially parallel to said pair of resilient terminal blades (4a, 4b; 14a, 14b) located facing each other, whereby the vibration-generating small-sized motor (1) can be electrically connected to the power supply of the electronic equipment.

8. The portable electronic equipment according to any one of claims 1 through 7, wherein there are provided stoppers (5a, 5b; 25a, 25b) to limit the width of opening of said terminal blades (4a, 4b; 14a, 14b; 24a, 24b) in a direction that said terminal blades (4a, 4b; 14a, 14b; 24a, 24b) are pushed apart by the electrode or the power supply land (55) on the circuit board (50).

9. The portable electronic equipment according to claim 1, wherein the terminal-blade mount (5) is made of an insulating material and located on one end or side of the external housing case (3) and includes a substantial U - shaped groove cut therein, and the resilient terminal blades (4a, 4b) facing each other are located in a contact position corresponding to the electrode or the power supply land (55) of the circuit board (50) that are inserted into said groove, and the electrode or the power supply land (55) are clamped between said resilient terminal blades (4a, 4b) when the electrode or the power supply land (55) are inserted into said groove, whereby the vibration-generating small-sized motor (1) can be electrically connected to the power supply of the electronic equipment.

10. The portable electronic equipment according to any one of claims 1 through 9, wherein a position of connection of the electrode or the power supply land (55) on the circuit board (50) to the motor (1) is in substantially the same plane as the central axis of rotation of the motor (1).

11. The portable electronic equipment according to any one of claims 1, 2, and 4 through 9, wherein a position of connection of the electrode or the power supply lands (55) on the circuit board (50) to the motor (1) is located at any desired point from the central axis of rotation of the motor (1) to an outer periphery of the terminal-blade mount (5) at the external housing case (3).

12. The portable electronic equipment according to any one of claims 1 through 11, wherein said motor (1) includes a power supply mechanism in which each of the terminal blades (4a, 4b) of said pair of power supply terminals (4) is independently positive or negative, and said circuit board (50) within the electronic equipment includes wiring on both surfaces corresponding to said power supply mechanism.

## Patentansprüche

1. Tragbares elektronisches Gerät mit einem schwingungserzeugenden Kleinmotor (1), der einen Mechanismus zur Erzeugung einer Schwingung unter Verwendung eines Exzentergewichts (6) aufweist, wobei der Motor (1) im Inneren des tragbaren elektronischen Geräts angebracht ist, das mit einer Elektrode bzw. einer Stromversorgungskontaktfläche (55) auf einer Leiterplatte (50) versehen ist, wobei der Motor (1) innerhalb seines Außengehäusemantels (3; 13) folgendes umfasst:
einen Stator und einen Rotor,
einen Kommutierungsmechanismus,
eine Stromversorgungsanschlussklemme (4; 24), die elektrisch an die Elektrode bzw. Stromversorgungskontaktfläche (55) des elektronischen Geräts anschließbar ist, und
eine Anschlussklemmenzungenaufnahme (5; 15; 25), an der die Stromversorgungsanschlussklemme (4) angebracht ist,
wobei die Stromversorgungsanschlussklemme (4) zwei nachgiebige Anschlussklemmenzungen (4a, 4b; 14a, 14b; 24a, 24b) aufweist, die an der an einer Stirnseite des Außengehäusemantels (3; 13) des Motors (1) vorgesehenen Anschlussklemmenzungenaufnahme (5) einander gegenüberliegen und gegeneinander drücken, und die Elektrode bzw. die Stromversorgungskontaktfläche (55) auf der Leiterplatte (50) zwischen die nachgiebigen Anschlussklemmenzungen (4a, 4b; 14a, 14b) geklemmt ist, wodurch der schwingungserzeugende Kleinmotor (1) elektrisch an die Stromversorgung des elektronischen Geräts angeschlossen werden kann.

2. Tragbares elektronisches Gerät nach Anspruch 1, bei dem es sich bei der Stromversorgungsanschlussklemme (4) um zwei Anschlussklemmenzungen (4a, 4b) aus nachgiebigem gebogenem Blattfedermaterial handelt, die an einem Ende des Außengehäusemantels (3) einander gegenüber und im wesentlichen parallel zu einer Drehachse liegen.

3. Tragbares elektronisches Gerät nach Anspruch 1, bei dem es sich bei der Stromversorgungsanschlussklemme (4) um zwei Anschlussklemmenzungen (14a, 14b) aus nachgiebigem gebogenem Blattfedermaterial handelt, die an einer Seite des Außengehäusemantels (13) einander gegenüber und im wesentlichen senkrecht zu einer Drehachse liegen.

4. Tragbares elektronisches Gerät nach einem der Ansprüche 1 bis 3, bei dem Kontaktpunkte der Anschlussklemmenzungen (4a, 4b), die der Elektrode bzw. der Stromversorgungskontaktfläche (55) auf der Leiterplatte (50) und deren Umgebung gegenüberliegen, freiliegen, und übrige Außenumfangsbereiche der Anschlussklemmenzungen (4a, 4b) mit einem Isoliermaterial abgedeckt sind.

5. Tragbares elektronisches Gerät nach einem der Ansprüche 1 bis 4, bei dem jede der Anschlussklemmenzungen (4a, 4b) der zwei Stromversorgungsanschlussklemmen (4) unabhängig voneinander positiv oder negativ ist.

6. Tragbares elektronisches Gerät nach einem der Ansprüche 1 bis 4, bei dem beide der Anschlussklemmenzungen (14a, 14b) der zwei Stromversorgungsanschlussklemmen (4) entweder positiv oder negativ sind und zwei Paare zusammen als positive und negative Leiter verwendet werden.

7. Tragbares elektronisches Gerät nach einem der Ansprüche 1 bis 6, bei dem die Elektrode bzw. die Stromversorgungskontaktfläche (55) auf der Leiterplatte (50) des elektronischen Geräts in einer zu den zwei einander gegenüberliegenden, nachgiebigen Anschlussklemmenzungen (4a, 4b; 14a, 14b) im wesentlichen parallelen Richtung eingeschoben wird, wodurch der schwingungserzeugende Kleinmotor (1) elektrisch an die Stromversorgung des elektronischen Geräts angeschlossen werden kann.

8. Tragbares elektronisches Gerät nach einem der Ansprüche 1 bis 7, bei dem Anschläge (5a, 5b; 25a, 25b) zur Begrenzung der Öffnungsbreite der Anschlussklemmenzungen (4a, 4b; 14a, 14b; 24a, 24b) in einer Richtung vorgesehen sind, in der die Anschlussklemmenzungen (4a, 4b; 14a, 14b; 24a, 24b) von der Elektrode bzw. der Stromversorgungskontaktfläche (55) auf der Leiterplatte (50) auseinandergedrückt werden.

9. Tragbares elektronisches Gerät nach Anspruch 1, bei dem die Anschlussklemmenzungenaufnahme (5) aus einem Isoliermaterial besteht und sich an einem Ende oder einer Seite des Außengehäusemantels (3) befindet und eine darin ausgesparte im wesentlichen U-förmige Nut aufweist, und die einander gegenüberliegenden nachgiebigen Anschlussklemmenzungen (4a, 4b) in einer Kontaktposition liegen, die der Elektrode bzw. der Stromversorgungskontaktfläche (55) der Leiterplatte (50) entspricht, die in die Nut eingeschoben werden, und die Elektrode bzw. die Stromversorgungskontaktfläche (55) zwischen die nachgiebigen Anschlussklemmenzungen (4a, 4b) geklemmt ist, wenn die Elektrode bzw. die Stromversorgungskontaktfläche (55) in die Nut eingeschoben ist, wodurch der schwingungserzeugende Kleinmotor (1) elektrisch an die Stromversorgung des elektronischen Geräts angeschlossen werden kann.

10. Tragbares elektronisches Gerät nach einem der Ansprüche 1 bis 9, bei dem eine Position, in der die Elektrode bzw. die Stromversorgungskontaktfläche (55) auf der Leiterplatte (50) mit dem Motor (1) verbunden ist, im wesentlichen in der gleichen Ebene wie die zentrale Drehachse des Motors (1) liegt.

11. Tragbares elektronisches Gerät nach einem der Ansprüche 1, 2 und 4 bis 9, bei dem eine Position, in der die Elektrode bzw. die Stromversorgungskontaktflächen (55) auf der Leiterplatte (50) mit dem Motor (1) verbunden ist bzw. sind, an einem gewünschten Punkt von der zentralen Drehachse des Motors (1) bis zu einem Außenumfang der Anschlussklemmenzungenaufnahme (5) am Außengehäusemantel (3) gelegen ist.

12. Tragbares elektronisches Gerät nach einem der Ansprüche 1 bis 11, bei dem der Motor (1) einen Stromversorgungsmechanismus aufweist, bei dem jede der Anschlussklemmenzungen (4a, 4b) der zwei Stromversorgungsanschlussklemmen (4) unabhängig voneinander positiv oder negativ ist, und die Leiterplatte (50) in dem elektronischen Gerät eine Verdrahtung auf beiden Oberflächen aufweist, die dem Stromversorgungsmechanismus entspricht.

## Revendications

1. Appareil électronique portable comportant un petit moteur (1) engendrant des vibrations, qui présente un mécanisme pour engendrer une vibration en utilisant un poids excentrique (6), le moteur (1) étant monté à l'intérieur de l'appareil électronique portable qui est pourvu d'une électrode ou d'une surface de contact d'alimentation en courant (55) sur une carte de circuits imprimés (50), le moteur (1) comprenant les éléments suivants à l'intérieur de son boîtier extérieur (3 ; 13) :
un stator et un rotor ;
un mécanisme de commutation ;
une borne de raccordement d'alimentation en courant (4 ; 24) qui est connectée électriquement à l'électrode ou à la surface de contact d'alimentation en courant (55) de l'appareil électronique ; et
un support de lamelle de borne (5 ; 15 ; 25) sur lequel est montée la borne de raccordement d'alimentation en courant (4),
la borne de raccordement d'alimentation en courant (4) présentant deux lamelles de borne de raccordement (4a, 4b ; 14a, 14b ; 24a, 24b) souples qui sont situées à l'opposé l'une de l'autre sur le support de lamelle de borne (5) prévu sur une face du boîtier extérieur (3 ; 13) du moteur (1) et qui sont pressées l'une contre l'autre, et l'électrode ou la surface de contact d'alimentation en courant (55) étant serrée sur la carte de circuits imprimés (50) entre les lamelles de borne de raccordement (4a, 4b; 14a, 14b), ce par quoi le petit moteur (1) peut être électriquement connecté à l'alimentation en courant de l'appareil électronique.

2. Appareil électronique portable selon la revendication 1, dans lequel la borne de raccordement d'alimentation en courant (4) est une paire de lamelles de borne de raccordement (4a, 4b) en matériau de ressort à lame souple replié, lesquelles sont situées à l'opposé l'une de l'autre à une extrémité du boîtier extérieur (3) et sensiblement parallèles à un axe de rotation.

3. Appareil électronique portable selon la revendication 1, dans lequel la borne de raccordement d'alimentation en courant (4) est une paire de lamelles de borne de raccordement (14a, 14b) en matériau de ressort à lame souple replié, lesquelles sont situées à l'opposé l'une de l'autre à une extrémité du boîtier extérieur (13) et sensiblement perpendiculaires à un axe de rotation.

4. Appareil électronique portable selon l'une des revendications 1 à 3, dans lequel des points de contact des lamelles de borne de raccordement (4a, 4b), qui sont opposés a l'électrode ou à la surface de contact d'alimentation en courant (55) sur la carte de circuits imprimés (50) et à son voisinage, sont dégagés, et d'autres portions périphériques extérieures des lamelles de borne de raccordement (4a, 4b) sont recouvertes par un matériau isolant.

5. Appareil électronique portable selon l'une des revendications 1 à 4, dans lequel chacune des deux lamelles de borne de raccordement (4a, 4b) de la paire de bornes de raccordement d'alimentation en courant (4) est indépendamment positive ou négative.

6. Appareil électronique portable selon l'une des revendications 1 à 4, dans lequel les deux lamelles de borne de raccordement (14a, 14b) de la paire de bornes de raccordement d'alimentation en courant (4) sont soit positives soit négatives, et deux paires sont utilisées ensemble à titre de conducteurs positifs et négatifs.

7. Appareil électronique portable selon l'une des revendications 1 à 6, dans lequel l'électrode ou la surface de contact d'alimentation en courant (55) sur la carte de circuits imprimés (50) de l'appareil électronique est insérée dans une direction sensiblement parallèle à la paire de lamelles de borne de raccordement (4a, 4b ; 14a, 14b) souples opposées l'une à l'autre, ce par quoi le petit moteur (1) peut être électriquement connecté à l'alimentation en courant de l'appareil électronique.

8. Appareil électronique portable selon l'une des revendications 1 à 7, dans lequel des butées (5a, 5b ; 25a, 25b) sont prévues pour limiter la largeur d'ouverture des lamelles de borne de raccordement (4a, 4b ; 14a, 14b ; 24a, 24b) dans une direction dans laquelle les lamelles de borne de raccordement (4a, 4b ; 14a, 14b ; 24a, 24b) sont pressées en écartement par l'électrode ou la surface de contact d'alimentation en courant (55) sur la carte de circuits imprimés (50).

9. Appareil électronique portable selon la revendication 1, dans lequel le support de lamelle de borne (5) est en un matériau isolant et se trouve à une extrémité ou sur un côté du boîtier extérieur (3) et présente une gorge sensiblement en forme de U évidée dans celui-ci, et les lamelles de borne de raccordement (4a, 4b) souples opposées l'une à l'autre se trouvent dans une position de contact correspondant à l'électrode ou la surface de contact d'alimentation en courant (55) sont serrées entre les lamelles de borne de raccordement (4a, 4b) lorsque l'électrode ou la surface de contact d'alimentation en courant (55) sont insérées dans la gorge, ce par quoi le petit moteur (1) engendrant une vibration peut être connecté électriquement à l'alimentation en courant de l'appareil électronique.

10. Appareil électronique portable selon l'une des revendications 1 à 9, dans lequel une position de connexion de l'électrode ou de la surface de contact d'alimentation en courant (55) sur la carte de circuits imprimés (50) vers le moteur (1) est sensiblement dans le même plan que l'axe central de rotation du moteur (1).

11. Appareil électronique portable selon l'une des revendications 1, 2 et 4 à 9, dans lequel une position de connexion de l'électrode ou de la surface de contact d'alimentation en courant (55) sur la carte de circuits imprimés (50) vers le moteur (1) est située à un point souhaité depuis l'axe central de rotation du moteur (1) vers une périphérie extérieure du support de lamelle de borne (5) sur le boîtier extérieur (3).

12. Appareil électronique portable selon l'une des revendications 1 à 11, dans lequel le moteur (1) comprend un mécanisme d'alimentation en courant dans lequel chacune des lamelles de borne de raccordement (4a, 4b) de la paire de bornes de raccordement d'alimentation en courant (4) est indépendamment positive ou négative, et la carte de circuits imprimés (50) à l'intérieur de l'appareil électronique comprend un câblage sur les deux surfaces, qui correspond au mécanisme d'alimentation en courant.
